# EUROPÄISCHE PATENTANMELDUNG

(11) **EP 4 325 676 A1**
(43) Veröffentlichungstag der Anmeldung: **21.02.2024**
(21) Anmeldenummer: 22191176.1
(22) Anmeldetag: 19.08.2022
(51) Int. Cl.: H02G 3/22, H02B 1/30

(54) **KABELDURCHFÜHRUNGSVORRICHTUNG**

(71) Anmelder: Lapp Engineering AG, 6330 Cham (CH)
(72) Erfinder: Rentschler, Benjamin, 71083 Herrenberg (DE); Schubert, Maximilian, 76863 Herxheim (DE)
(74) Vertreter: Rutz & Partner

(57) **Zusammenfassung**

Die Kabeldurchführungsvorrichtung (1), die zur abgedichteten Durchführung von Kabeln (7) durch eine Trennwand (9) vorgesehen ist, umfasst einen Durchführungsrahmen (11), der mit einer Rückseite mit der Trennwand (9) verbindbar ist und der eine Aufnahmekammer (110) aufweist, in der eine Durchführungsanordnung (2), die mindestens einen parallel zu einer Durchführungsachse (y) verlaufenden Durchführungskanal (20) aufweist, an einer an der Rückseite des Durchführungsrahmens (11) vorgesehenen Halteleiste (114) anliegt, und eine Rahmenabdeckung (12), die mit der Frontseite des Durchführungsrahmens (11) verbindbar ist und die eine durch eine Abdeckleiste (124) begrenzte Abdeckungsöffnung (120) aufweist. Erfindungsgemäss ist vorgesehen, dass der Durchführungsrahmen (11) einen Verschlusskörper (113) mit einer Rastsenke (1151) sowie mehrere Verschlussöffnungen (116) umfasst, und dass die Rahmenabdeckung (12), die einen ersten Schenkel (121) und einen zweiten Schenkel (122) umfasst, die durch einen Verbindungskörper (123) miteinander verbunden sind, Verschlussköpfe (126) aufweist, die je parallel zu einer Durchführungsachse (y) durch einen zugeordneten Transferkanal (1161) in eine Verschlussöffnung (116) einschiebbar und senkrecht zur Durchführungsachse (y), vorzugsweise parallel zu einer Längsachse des Durchführungsrahmens (111), innerhalb eines Verschlusskanals (1162) in Verschlussrichtung gegen den Verschlusskörper (113) verschiebbar sind, bis eine an einem Endstück (1212) des ersten Schenkels (121) vorgesehene Rastnase (1215) in einer Verschlussstellung der Rahmenabdeckung (12) in die Rastsenke (1151) am Verschlusskörper (113) einrastet.

## Beschreibung

Die Erfindung betrifft eine Vorrichtung zur Durchführung eines oder mehrerer Kabel, einschliesslich Leitungen zur Durchführung von Medien aller Art, durch eine Trennwand, beispielsweise durch eine Gehäusewand im Eingangsbereich eines elektrischen Geräts oder eines Schaltschranks oder durch eine Gehäuseschale eines Steckverbinders.

Mittels einer Kabeldurchführungsvorrichtung soll die Trennfunktion einer Trennwand auch nach Durchführung von Kabeln und Leitungen unverändert aufrechterhalten werden. An den Montagepositionen, an denen ein Kabel durch eine Öffnung in der Kabeldurchführungsvorrichtung hindurch geführt wird, soll die Öffnung abgedichtet werden, so dass entlang dem montierten Kabel keine Flüssigkeiten und/oder Gase durch die Trennwand hindurch treten können. Mittels der Kabeldurchführungsvorrichtung werden Kabel üblicherweise auch mechanisch fixiert, so dass sie beim Auftreten mechanischer Belastungen nicht von den Anschlusskontakten getrennt werden und eine sogenannte Zugsentlastung realisiert wird.

Die EP2249448A2 offenbart eine Kabeldurchführungsvorrichtung mit einem Durchführungsrahmen und einer in den Durchführungsrahmen eingesetzten Durchführungsanordnung, die mehrere je mit einem Durchführungskanal versehene Durchführungsmodule und gegebenenfalls dazu korrespondierende Blindmodule mit gleichen Abmessungen aufweist. Jedes Durchführungsmodul umfasst ein Halteelement mit zwei miteinander verbindbaren Halteteilen, und ein elastisches Dichtelement mit zwei zusammensetzbaren Dichtungsteilen, die einen Durchführungskanal begrenzen. Beim Vorgang des Zusammenfügens der Halteteile werden die Dichtungsteile derart deformiert, dass die Grenzflächen der Dichtungsteile dicht abschliessend aneinander liegen und ein durchgeführtes Kabel innerhalb des Durchführungskanals dicht abschliessend umschlossen ist.

Beim Vorgang des Zusammenfügens der Durchführungsmodule zur Bildung der Durchführungsanordnung werden die Durchführungsmodule dicht abschliessend gegeneinander gepresst. Dazu werden die Durchführungsmodule einzelnen in den Durchführungsrahmen eingesetzt, bis die Durchführungsanordnung, die aufgrund der Elastizität der Durchführungsmodule ebenfalls elastisch ist, vollständig erstellt ist.

Die elastische Durchführungsanordnung liegt nach dem Zusammenfügen der Durchführungsmodule mit der Rückseite an einer Hinterschneidung des Durchführungsrahmens und mit den seitlichen Aussenseiten am Durchführungsrahmen an und ist durch den Anpressdruck innerhalb des Durchführungsrahmens kraftschlüssig gehalten.

Auf den Durchführungsrahmen wird eine Rahmenabdeckung aufgesetzt, die eine Abdeckungsöffnung vollständig umschliesst, sodass die Durchführungsanordnung zwischen der Hinterschneidung des Durchführungsrahmens und einer Hinterschneidung der Rahmenabdeckung gehalten ist. Die Rahmenabdeckung ist dabei mit Positionieröffnungen versehen, in die Positioniervorsprünge der Durchführungsmodule eingreifen können, die dadurch seitlich unverschiebbar gehalten werden. Dies hat den Nachteil, dass die Rahmenabdeckung mit den Positionieröffnungen zuerst gegenüber den Positioniervorsprüngen der Durchführungsmodule ausgerichtet werden müssen, wonach eine Verbindung zwischen der Rahmenabdeckung und dem Durchführungsrahmen erstellt werden muss, was mit entsprechenden Aufwand verbunden ist. Die Rahmenabdeckung verhindert in der Folge eine Verschiebung der Durchführungsmodule seitlich und in Richtung parallel zu den Durchführungskanälen, trägt aber zu einer sicheren Abdichtung der Durchführungsanordnung und der durchgeführten Kabel kaum etwas bei.

Zur Befestigung der Rahmenabdeckung wird diese typischerweise mit dem Durchführungsrahmen verschraubt, was einerseits Schraubengarnituren erfordert und anderseits einen erheblichen Montageaufwand verursacht.

Weiterhin erhöht sich bei Verwendung der Rahmenabdeckung der Installationsaufwand, da die installierten Kabel durch die Abdeckungsöffnung der Rahmenabdeckung hindurchzuführen sind. Entsprechende Aufwendungen ergeben sich auch, falls Änderungen der Installation vorzunehmen sind.

Der vorliegenden Erfindung liegt daher die Aufgabe zugrunde, eine verbesserte Kabeldurchführungsvorrichtung mit einem Durchführungsrahmen zu schaffen.

Insbesondere ist eine Kabeldurchführungsvorrichtung zu schaffen, die es erlaubt, eines oder mehrere Kabel gut abgedichtet durch eine Trennwand hindurchzuführen.

Die Kabeldurchführungsvorrichtung soll herstellerseitig mit wenigen Handgriffen zusammengesetzt und anwenderseitig mit wenigen Handgriffen installiert werden können.

Vorzugsweise soll die Kabeldurchführungsvorrichtung weniger Einzelteile aufweisen und dadurch wiederum herstellerseitig kostengünstiger gefertigt und zusammengebaut und anwenderseitig noch einfacher installiert werden können. Insbesondere soll auf zusätzliche Verbindungsmittel, wie Schraubengarnituren, verzichtet werden können.

Mittels der Kabeldurchführungsvorrichtung soll eine Durchführungsanordnung, die gegebenenfalls mehrere Durchführungsmodule mit je einem Durchführungskanal umfasst, in einem Durchführungsrahmen stabil und dicht abgeschlossen gehalten werden.

Diese Aufgabe wird mit einer Kabeldurchführungsvorrichtung gelöst, welche die in Anspruch 1 angegebenen Merkmale aufweist. Vorteilhafte Ausgestaltungen der Erfindung sind in weiteren Ansprüchen angegeben.

Die Kabeldurchführungsvorrichtung, die zur abgedichteten Durchführung wenigstens eines Kabels durch eine Trennwand vorgesehen ist, umfasst einen Durchführungsrahmen, der mit einer Rückseite mit der Trennwand verbindbar ist und der eine Aufnahmekammer aufweist, in der eine Durchführungsanordnung, die mindestens einen parallel zu einer Durchführungsachse verlaufenden Durchführungskanal aufweist, an einer an der Rückseite des Durchführungsrahmens vorgesehenen Halteleiste anliegt, und eine Rahmenabdeckung, die mit der Frontseite des Durchführungsrahmens verbindbar ist und die eine durch eine Abdeckleiste begrenzte Abdeckungsöffnung aufweist.

Erfindungsgemäss ist vorgesehen, dass der Durchführungsrahmen einen Verschlusskörper mit einer Rastsenke sowie mehrere Verschlussöffnungen umfasst, die je einen parallel zur Durchführungsachse verlaufenden Transferkanal und einen daran anschliessenden und senkrecht zur Durchführungsachse verlaufenden Verschlusskanal aufweisen, und dass die Rahmenabdeckung einen ersten Schenkel und einen zweiten Schenkel umfasst, an die die Abdeckleiste anschliesst und die an ersten Endstücken durch einen Verbindungskörper miteinander verbunden und die mit zweiten Endstücken, zwischen denen die Abdeckungsöffnung nicht abgeschlossen ist, dem Verschlusskörper zugewandt sind, und dass die Rahmenabdeckung den Verschlussöffnungen zugewandte Verschlussköpfe aufweist, die je parallel zur Durchführungsachse durch einen zugeordneten Transferkanal in eine Verschlussöffnung einschiebbar und senkrecht zur Durchführungsachse, vorzugsweise parallel zu einer Längsachse des Durchführungsrahmens, innerhalb des zugehörigen Verschlusskanals in Verschlussrichtung gegen den Verschlusskörper verschiebbar sind, bis eine an einem zweiten Endstück des ersten Schenkels vorgesehene Rastnase in einer Verschlussstellung der Rahmenabdeckung in die Rastsenke am Verschlusskörper einrastet.

Die Rahmenabdeckung kann daher in einer ersten Bewegung parallel zur Durchführungsachse gegen den Durchführungsrahmen verschoben werden, bis die Verschlussköpfe in die Verschlussöffnungen eingeführt sind und in einer zweiten Bewegung senkrecht zur Durchführungsachse, vorzugsweise parallel zur Längsachse der Kabeldurchführungsvorrichtung verschoben werden, bis die Rahmenabdeckung am Durchführungsrahmen einrastet.

Dies hat den Vorteil, dass die vorzugsweise elastische Durchführungsanordnung bei der ersten Bewegung der Rahmenabdeckung parallel zur Durchführungsachse leicht komprimiert werden kann, sodass diese deformiert wird und dicht abschliessend an den Wänden der Aufnahmekammer anliegt.

Durch die zweite Bewegung senkrecht zur Durchführungsachse wird die Rahmenabdeckung mittels den Verschlussköpfen fest mit dem Durchführungsrahmen verbunden. Durch das Einrasten der Rastnase in die Rastsenke erfolgt eine Verriegelung der erzielten Verbindung, die somit nur wieder gelöst werden kann, wenn zuerst die Rastnase aus der Rastsenke gelöst wird.

Die zweite Bewegung der Rahmenabdeckung kann dabei sehr kurz sein, sodass für den Montagevorgang der Rahmenabdeckung kaum Raum in Anspruch genommen wird. Montage der Rahmenabdeckung erfolgt vorteilhaft ohne weitere Verbindungsmittel, wie Schraubengarnituren. Die Durchführungsanordnung kann daher in die Aufnahmekammer eingesetzt und durch Aufsetzen der Rahmenabdeckung praktisch mit einem Handgriff gesichert werden.

Der mit dem Durchführungsrahmen verbundene Verschlusskörper weist vorzugsweise ein erstes und ein zweites Endstück auf, wobei das erste Endstück des Verschlusskörpers, an dessen Oberseite die Rastsenke vorgesehen ist, vom zweiten Endstück des ersten Schenkels, an dessen Unterseite die Rastnase vorgesehen ist, in der Verschlussstellung der Rahmenabdeckung ganz oder teilweise überlappt ist, und wobei das zweite Endstück des Verschlusskörpers in der Verschlussstellung der Rahmenabdeckung vom zweiten Endstück des zweiten Schenkels ganz oder teilweise überlappt ist. In der Verschlussstellung der Rahmenabdeckung wird der Verschlusskörper daher oben und unten von den Schenkeln der Rahmenabdeckung überdeckt.

In der Verschlussstellung der Rahmenabdeckung schliesst die Abdeckleiste vorzugsweise nahtlos an den Verschlusskörper an und bildet mit dem Verschlusskörper, der die Abdeckungsöffnung abschliesst, vorzugsweise eine ebene Frontfläche an der Frontseite der Kabeldurchführungsvorrichtung. Die Bildung einer einheitlichen Frontfläche ist nicht nur ästhetisch vorteilhaft, sondern erlaubt auch eine einfache Reinigung der installierten Kabeldurchführungsvorrichtung.

Die Abdeckungsöffnung der Rahmenabdeckung ist erst dann abgeschlossen, wenn die Rahmenabdeckung mit dem Durchführungsrahmen verbunden ist und in die Verschlussstellung überführt wurde. Dies hat den Vorteil, dass die zu installierenden oder installierten Kabel nicht durch die Abdeckungsöffnung hindurch geführt werden müssen und die Rahmenabdeckung beliebig vom Durchführungsrahmen gelöst und auf den Durchführungsrahmen wieder aufgesetzt werden kann. Auf diese Weise resultiert wiederum eine signifikante Vereinfachung des Installationsvorgangs.

In einer vorzugsweisen Ausgestaltung weist der Durchführungsrahmen einen Montagerahmen und einen demgegenüber verkleinerten Lagerrahmen auf, die in Richtung der Durchführungsachse gegeneinander versetzt sind und die an einer Seite an den Verschlusskörper anschliessen, der zusammen mit dem Montagerahmen und dem Lagerrahmen die Aufnahmekammer umschliesst.

Die Rahmenabdeckung ist vorzugsweise zumindest annähernd parallel zur Durchführungsachse auf den Lagerrahmen aufsetzbar und nach dem Eingriff der Verschlussköpfe in den Transferkanal parallel zur Längsachse des Durchführungsrahmens in die Verschlussstellung verschiebbar. Der Lagerrahmen, der an den Montagerahmen anschliesst, dient daher der Aufnahme und Lagerung der Rahmenabdeckung und wird von den Schenkeln und vom Verbindungskörper der Rahmenabdeckung oben, unten und seitlich umschlossen. Die Schenkel der Rahmenabdeckung liegen vorzugsweise spielfrei am Lagerrahmen an. Der Lagerrahmen erleichtert daher die Montage der Rahmenabdeckung und hält diese in Position. In der Verschlussstellung umschliesst die Rahmenabdeckung den Lagerrahmen vorzugsweise bis zum Verschlusskörper und liegt vorzugsweise stirnseitig am Montagerahmen an.

Die Rahmenabdeckung und das von den zweiten Endstücken der Schenkel überlappte Teil des Verschlusskörpers weisen vorzugsweise denselben Querschnitt auf wie der Montagerahmen und schliessen vorzugsweise bündig daran an, sodass der Durchführungsrahmen und die Rahmenabdeckung einen praktisch einheitlichen Körper bilden, der wiederum ästhetisch vorteilhaft in Erscheinung tritt und einfach gereinigt werden kann.

Das zweite Endstück des ersten Schenkels der Rahmenabdeckung weist vorzugsweise einen Entriegelungshebel auf, welcher in der Verschlussstellung der Rahmenabdeckung über den Verschlusskörper hinausragt, sodass er manuell erfasst und betätigt werden kann, um die Rastnase aus der Rastsenke zu lösen. Nach der Entriegelung der Rahmenabdeckung kann diese verschoben werden, um die Verschlussköpfe aus den Verschlussöffnungen zu lösen.

Vorzugsweise weist der Verschlusskörper beabstandet von der Rastsenke eine Montagenut auf, die parallel zur Durchführungsachse verläuft und die derart positioniert ist, dass bei einem Eingriff der Rastnase in die Montagenut die Verschlussköpfe der auf den Montagerahmen aufgesetzten Rahmenabdeckung koaxial zu den Transferkanälen der Verschlussöffnungen ausgerichtet sind. Die Rahmenabdeckung kann daher leicht vormontiert werden, indem die Rastnase auf die Montagenut aufgesetzt und mit der Rahmenabdeckung gegen den Durchführungsrahmen geführt wird. Bei diesem Vorgang treten die Verschlussköpfe automatisch in die Transferkanäle der Verschlussöffnungen ein. Nach diesem Vorgang befindet sich die Rahmenabdeckung in der Montageposition und kann durch eine kurze seitliche Verschiebung in Verschlussrichtung in die Verschlussposition gebracht und dort selbsttätig verriegelt werden. Umgekehrt kann die Rahmenabdeckung nach dem Lösen der Rastnase aus der Rastsenke von der Verschlussposition wieder in die Montageposition zurückgeführt werden. Vorteilhaft ist dabei, dass die Rahmenabdeckung in der Montageposition noch immer gehalten ist und mit einem Handgriff vom Lagerrahmen gelöst werden kann.

Die Montagenut ist vorzugsweise nach aussen gegen den Rand des Verschlusskörpers geöffnet, sodass die Rastnase von der Frontseite her koaxial in die Montagenut einführbar und wieder lösbar ist.

Die Rastnase ist vorzugsweise hakenförmig oder sägezahnförmig ausgebildet und weist frontseitig eine geneigte Flanke auf, sodass die Rahmenabdeckung, wenn die Rastnase in Eingriff mit der Rastsenke oder in Eingriff mit der Montagenut steht in eine Richtung entgegengesetzt zur Verschlussrichtung unverschiebbar gehalten ist und wenn die Rastnase in Eingriff mit der Montagenut steht, in Verschlussrichtung verschiebbar und in Richtung parallel zur Durchführungsachse vom Durchführungsrahmen lösbar ist. Wenn die Rastnase in Eingriff mit der Montagenut steht, kann die geneigte Flanke über den Rand der Montagenut gleiten und sich aus der Montagenut lösen und anschliessend in die Rastsenke eintreten. Das zweite Endstück des ersten Schenkels der Rahmenabdeckung weist dazu die erforderliche Elastizität auf, damit diese Bewegungen ausgeführt werden können.

Bei einer Verschiebung der Rahmenabdeckung in Verschlussrichtung, bei der die Rastnase von der Montagenut zur Rastsenke gelangt, wird jeder der Verschlussköpfe in den zugehörigen Verschlusskanal der Verschlussöffnungen gefahren, sodass die Rahmenabdeckung in Richtung der Durchführungsachse vorzugsweise spielfrei gehalten ist.

Vorzugsweise ist jeder der Verschlussköpfe schwalbenschwanzförmig ausgebildet und weist eine Frontseite mit einem Querschnitt auf, der etwa dem Querschnitt des Transferkanals der Verschlussöffnungen entspricht. Der anschliessende Verschlusskanal, weist eine Öffnung mit einem reduzierten Querschnitt auf, in dem nur das verjüngte Teil oder der Hals des Verschlusskopfs eintreten kann. Der Verschlusskanal ist daher zur Aufnahme des Verschlusskopfs geeignet und umschliesst diesen teilweise, sodass nur das verjüngte Teil des Verschlusskopfs aus dem Verschlusskanal heraustreten kann und der Verschlusskopf innerhalb des Verschlusskanals nur parallel zur Verschlussrichtung der Rahmenabdeckung verschiebbar ist.

Die Durchführungsanordnung ist vorzugsweise zumindest teilweise elastisch ausgebildet und etwas grösser als die Aufnahmekammer dimensioniert, sodass sie beim Einfügen in die Aufnahmekammer und/oder beim Aufsetzen der Rahmenabdeckung komprimiert und dicht abschliessend an die Wände der Aufnahmekammer gepresst wird. Durch die Kompression der Durchführungsanordnung werden vorzugsweise auch die durchgeführten Kabel in den Durchführungskanälen dicht umschlossen.

Die Durchführungsanordnung umfasst vorzugsweise mehrere Durchführungsmodule, die je einen Durchführungskanal aufweisen. Die Durchführungsmodule sind vorzugsweise identisch ausgebildet und modular zusammensetzbar, sodass sie eine Einheit bilden. Dabei können die Abmessungen der Durchführungsmodule derart gewählt sein, dass die Abmessungen einer Kombination von kleineren Modulen den Abmessungen von grösseren Modulen entsprechen.

Vorzugsweise umfasst jedes der Durchführungsmodule ein Halteelement mit zwei vorzugsweise identisch ausgebildeten Halteteilen, die ineinander einrastbar sind, und ein Dichtungselement mit zwei vorzugsweise identisch ausgebildeten elastischen Dichtungsteilen, die ineinander verschiebbar und innerhalb des Halteelements unter Druck gehalten sind. Durch die Kompressibilität der Durchführungsmodule wird sichergestellt, dass diese mit ihren Aussenseiten dicht abschliessend aneinander anliegen, und in den Durchführungskanälen installierte Kabel abgedichtet umschliessen.

Die Halteteile umfassen vorzugsweise zueinander korrespondierende Rastelemente, wie Rastschlaufen und Raststäbe, sodass sie in einfacher Weise miteinander verbunden werden können. Die Dichtungsteile umfassen vorzugsweise zueinander korrespondierende Dichtungslamellen, die ineinander eingreifen und bei einer Deformation ein installiertes Kabel abgedichtet umschliessen können.

Nachfolgend wird die Erfindung anhand von Zeichnungen näher erläutert. Dabei zeigt:
- Fig. 1: eine erfindungsgemässe Kabeldurchführungsvorrichtung 1 mit einem Durchführungsrahmen 11, der mittels Montageschrauben 81 an einer Trennwand 9 montiert ist, in dem eine Durchführungsanordnung 2 mit mehreren Durchführungsmodulen 2A, 2B, 2C, 2D in einer Aufnahmekammer 110 angeordnet ist, und an dessen Frontseite eine Rahmenabdeckung 12 aufgesetzt ist;
- Fig. 2: den Durchführungsrahmen 11 und die um 180° gedrehte Rahmenabdeckung 12 von Fig. 1, die zwei durch einen Verbindungskörper 123 miteinander verbundene Schenkel 121, 122 aufweist, von denen der erste Schenkel 121 frontseitig einen Verriegelungshebel 1216 mit einer Rastnase 1215 aufweist, die alternativ in eine Rastsenke 1151 oder in eine Montagenut 1152 eingreifen kann, die an einem Verschlusskörper 113 des Durchführungsrahmens 11 vorgesehen sind;
- Fig. 3: die Kabeldurchführungsvorrichtung 1 von Fig. 1 in Explosionsdarstellung;
- Fig. 4a: den Durchführungsrahmen 11 und die Rahmenabdeckung 12 von Fig. 1 in Schnittdarstellung mit der Rastnase 1215 des Verriegelungshebels 1216, die in der Rastsenke 1151 des Durchführungsrahmens 11 verankert ist;
- Fig. 4b: den Durchführungsrahmen 11 und die Rahmenabdeckung 12 von Fig. 3 in Schnittdarstellung mit der Rastnase 1215 des Verriegelungshebels 1216, die in der Montagenut 1152 des Durchführungsrahmens 11 gehalten ist;
- Fig. 5: den Durchführungsrahmen 11 während dem Einsetzen der Durchführungsmodule 2A, 2b, 2C, 2D der Durchführungsanordnung 2 in die Aufnahmekammer 110 des Durchführungsrahmens 11;
- Fig. 6a: die Durchführungsvorrichtung 1 von Fig. 1 mit der vom Durchführungsrahmen 11 gelösten Rahmenabdeckung 12;
- Fig. 6b: die Durchführungsvorrichtung 1 von Fig. 6a bei der Montage der Rahmenabdeckung 12, bei der die Rastnase 1215 der Rahmenabdeckung 12 mit der Montagenut 1152 am Verschlusskörper 113 gekoppelt wird;
- Fig. 6c: die Durchführungsvorrichtung 1 von Fig. 6b nach der Verriegelung der Rahmenabdeckung 12 mit Verrastung der Rastnase 1215 in der Rastsenke 1151 des Verschlusskörpers 113; und
- Fig. 7: eines der Durchführungsmodule 2A, 2b, 2C, 2D mit einem zweiteiligen Halteelement 21 und einem zweiteiligen Dichtungselement 22 in Explosionsdarstellung.

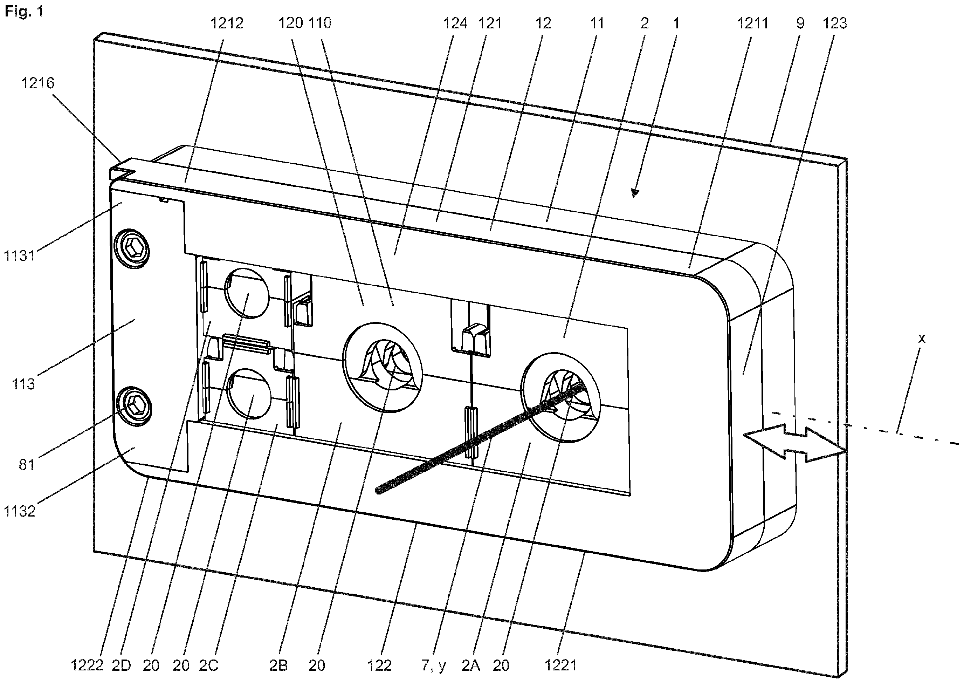

Fig. 1 zeigt eine erfindungsgemässe Kabeldurchführungsvorrichtung 1 mit einem Durchführungsrahmen 11, dessen Rückseite mittels Montageschrauben 81 mit einer Trennwand 9 verbunden ist, und auf dessen Frontseite eine Rahmenabdeckung 12 aufgesetzt ist. Der Durchführungsrahmen 11 umfasst eine Aufnahmekammer 110, in der eine Durchführungsanordnung 2 mit mehreren Durchführungsmodulen 2A, 2B, 2C, 2D eingesetzt wurde. Durch einen Durchführungskanal 20 des ersten Durchführungsmoduls 2A ist ein Kabel 7 hindurch geführt, das symbolisch gezeigt ist und das in Realität im Durchführungskanal 20 dicht abschliessend umschlossen ist. Die Durchführungsmodule 2A, 2B einerseits und die Durchführungsmodulen 2C, 2D weisen unterschiedliche Abmessungen auf, ergänzen sich aber jeweils zu einem Quader, welcher die Aufnahmekammer 110 vollständig ausfüllt. Einzelne der Durchführungsmodule 2A, 2B, 2C, 2D können auch durch Blindmodule ersetzt werden, die keinen Durchführungskanal aufweisen. Die Durchführungsanordnung 2 wird daher je nach Bedarf des Anwenders zusammengesetzt.

Die Kabeldurchführungsvorrichtung 1 weist eine Längsachse x und eine Durchführungsachse y auf, parallel zu der die Durchführungskanäle 20 verlaufen. Wie dies nachstehend beschrieben wird, ist die aufgesetzte Rahmenabdeckung 12 parallel zur Längsachse x zwischen einer Verschlussposition und einer Montagepositionen verschiebbar, aus der sie parallel zur Durchführungsachse x vom Durchführungsrahmen 11 gelöst werden kann. Die Verschiebungsstrecke zwischen der Verriegelungsposition und der Montagepositionen ist sehr kurz und beträgt beispielsweise 5 mm - 10 mm, sodass für die Bedienung der Kabeldurchführungsvorrichtung 1 nur wenig zusätzlicher Raum beansprucht wird.

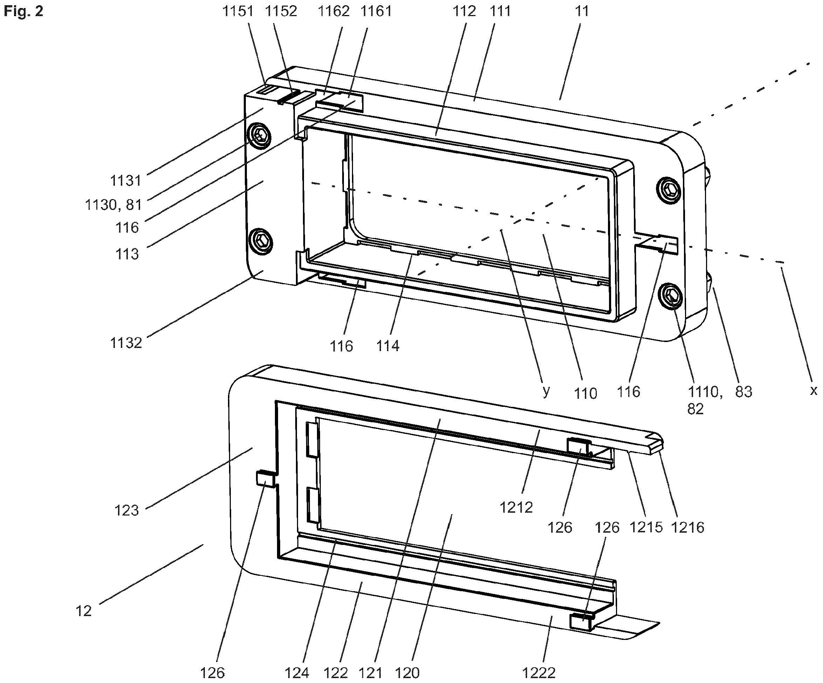

Fig. 2 zeigt, dass die Durchführungsanordnung 2 an der Rückseite des Durchführungsrahmens 11 von einer Halteleiste 114 gehalten ist, die nur wenig, zum Beispiel 2mm - 5mm, in den Querschnitt der Aufnahmekammer 110 hineinragt.

Frontseitig ist der Rand der Durchführungsanordnung 2 durch eine Abdeckleiste 124 der Rahmenabdeckung 12 überdeckt. Die Breite der Abdeckleiste 124, die eine Abdeckungsöffnung 120 teilweise umschliesst, ist derart gewählt, dass die Durchgangskanäle 20 der Durchführungsanordnung 2 nicht überdeckt werden.

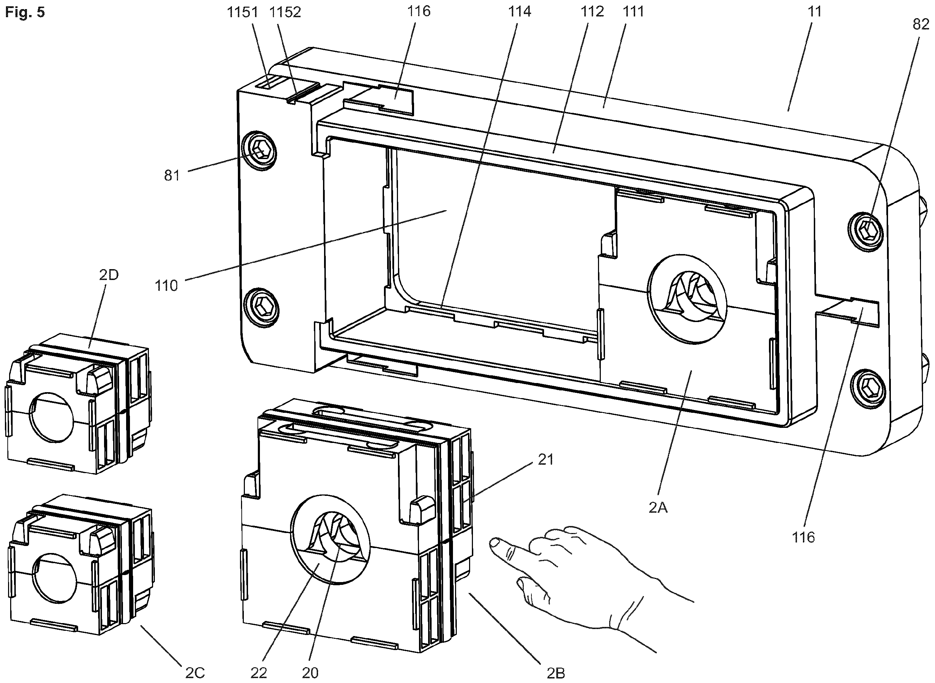

Die Durchführungsanordnung 2 ist somit an der Rückseite durch die Halteleiste 114 und an der Frontseite durch die Abdeckleiste 124 gehalten. Weiterhin ist die Durchführungsanordnung 2 innerhalb der Aufnahmekammer 110 unter Druck gehalten, sodass die Aussenseiten der Durchführungsanordnung 2 dicht abschliessend an die Wände der Aufnahmekammer 110 angepresst werden (siehe zum Beispiel Fig. 5) . Da die Rahmenabdeckung 12 in Richtung parallel zur Durchführungsachse y auf den Durchführungsrahmen 11 aufgesetzt wird, kann vorteilhaft auch ein Druck von der Rahmenabdeckung 12 auf die Durchführungsanordnung 2 ausgeübt werden.

Fig. 1 zeigt, dass der Durchführungsrahmen 11 einen Montagerahmen 11 aufweist, der an der linken Seite vorzugsweise einstückig an einen Verschlusskörper 113 anschliesst, der ein oberes Endstück 1131 und ein unteres Endstück 1132 umfasst und der bis zur Frontseite der Rahmenabdeckung 12 hervor ragt.

Die Rahmenabdeckung 12 umfasst einen ersten und einen zweiten Schenkel 121, 122, die parallel zueinander ausgerichtet sind und deren erste Endstücke 1211, 1221 durch einen Verbindungskörper 123 miteinander verbunden sind. Die vom Verbindungskörper 123 entfernt liegenden zweiten Endstücke 1212, 1222 der beiden Schenkel 121, 122 sind dem Verschlusskörper 113 zugewandt. Das zweite Endstück 1212 des ersten Schenkels 121 überdeckt die Oberseite des ersten Endstücks 1131 des Verschlusskörpers 113 und das zweite Endstück 1222 des zweiten Schenkels 122 überdeckt die Unterseite des zweiten Endstücks 1132 des Verschlusskörpers 113.

Die Abdeckleiste 214, die an die beiden Schenkel 121, 122 und vorzugsweise auch an den Verbindungskörper 123 anschliesst, erstreckt sich bis zum Verschlusskörper 113 und bildet mit diesem vorzugsweise unterbruchsfrei eine ebene Frontfläche.

Die Abdeckungsöffnung 120 ist daher erst vollständig abgeschlossen, wenn die zweiten Endstücke 1212, 1222 der Schenkel 121, 122 am Verschlusskörper 113 anliegen. Sobald die Rahmenabdeckung 12 vom Verschlusskörper 113 wieder gelöst wird, ist die Abdeckungsöffnung 120 auf dieser Seite wieder geöffnet, sodass die installierten Kabel 7 an dieser Seite aus der Abdeckungsöffnung 120 herausgeführt werden können. Die Kabel 7 müssen daher nicht axial in die Abdeckungsöffnung 120 eingeführt und daraus wieder entnommen werden, sondern werden seitlich in die Rahmenabdeckung 12 eingeführt, wenn diese montiert wird.

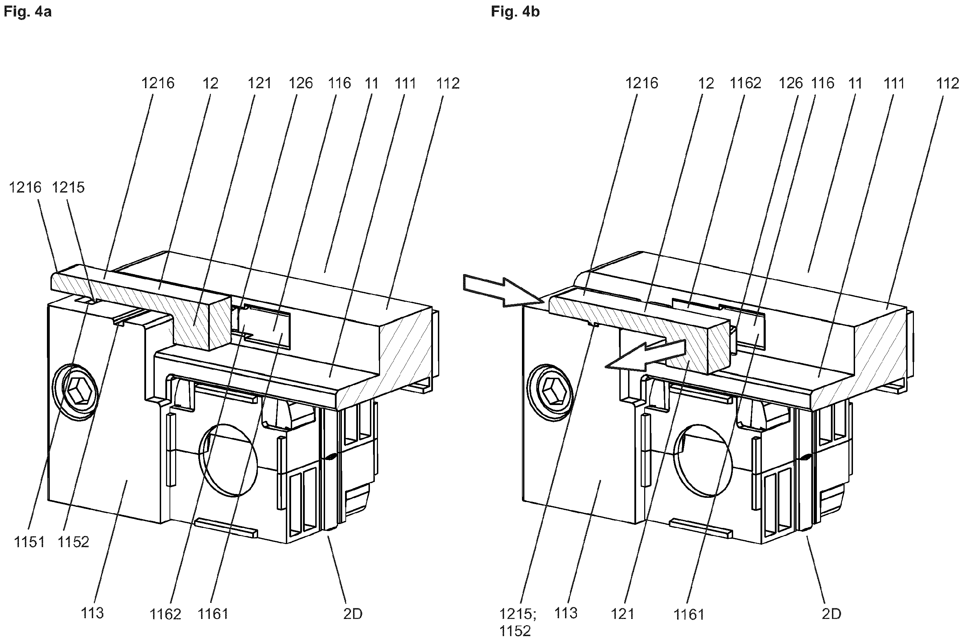

Die Rahmenabdeckung 12 ist in Fig. 1 in einer Verschlussposition gezeigt, in der eine an der Unterseite des zweiten Endstücks 1212 des ersten Schenkels 121 vorgesehene Rastnase 1215 in eine Rastsenke 1151 am ersten Endstück 1131 des Verschlusskörpers 113 eingreift und die Rahmenabdeckung 12 verriegelt hält (siehe Fig. 4a) .

Zur Entriegelung der Rahmenabdeckung 12 ist am zweiten Endstück 1212 des ersten Schenkels 121 der Rahmenabdeckung 12 ein Entriegelungshebel 1216 vorgesehen, der den Durchführungsrahmen 11 in der Verschlussstellung überragt und der somit manuell betätigt bzw. angehoben werden kann, um die Rastnase 1215 aus der Rastsenke 1151 zu lösen (siehe Fig. 4a).

Fig. 1 zeigt weiterhin, dass die Rahmenabdeckung 12 und der davon überdeckte Teil des Verschlusskörpers 113 in Kombination denselben Querschnitt wie der Montagerahmen 11 aufweisen, weshalb die montierte und fertig installierte Kabeldurchführungsvorrichtung 1, vorbehaltlich des Entriegelungshebels 1216 über die gesamte Tiefe einen einheitlichen Querschnitt aufweist.

Fig. 2 zeigt den Durchführungsrahmen 11 und die vom Durchführungsrahmen 11 gelöste und um 180° gedrehte Rahmenabdeckung 12 von Fig. 1.

Die Abdeckungsöffnung 120 der Rahmenabdeckung 12 ist von der Abdeckleiste 124 nur auf drei Seiten begrenzt und zwischen den zweiten Endstücken 1212, 1222 der Schenkel 121, 122 geöffnet.

An den zweiten Endstücken 1212, 1222 der Schenkel 121, 122 und am Verbindungskörper 123 sind Verschlussköpfe 126 vorgesehen, die vorzugsweise die Form eines Schwalbenschwanzes aufweisen. Am zweiten Endstück 1212 des ersten Schenkels 121 sind an der Unterseite die Rastnase 1215 und an der Frontseite der Entriegelungshebel 1216 vorgesehen.

Der Durchführungsrahmen 11 umfasst einen Montagerahmen 111 und einen demgegenüber verkleinerten Lagerrahmen 112, die in Richtung der Durchführungsachse y gegeneinander versetzt sind und die an einer Seite vorzugsweise einstückig an den Verschlusskörper 113 anschliessen, der zusammen mit dem Montagerahmen 111 und dem Lagerrahmen 112 die Aufnahmekammer 110 umschliesst.

Der Verschlusskörper 113 weist an der Oberseite des ersten Endstücks 1131 die Rastsenke 1151 und beabstandet davon eine Montagenut 1152 auf.

Der Verschlusskörper 113 weist ferner erste Schraubenkanäle 1130 auf, in die erste Montageschrauben 81 eingeführt sind. Der Montagerahmen 111 weist auf der dem Verschlusskörper 113 gegenüber liegenden Seite zweite Schraubenkanäle 1110 auf, in die zweite Montageschrauben 82 eingesetzt sind.

Der Montagerahmen 111 weist angrenzend an das obere und das untere Endstück 1131, 1132 des Verschlusskörpers 113 und auf der dem Verschlusskörper 113 abgewandten Seite je eine Verschlussöffnung 116 auf, die einen Transferkanal 1161 und einen Verschlusskanal 162 umfassen, die beide nach aussen geöffnet sind, aber unterschiedliche Öffnungsquerschnitte aufweisen, sodass ein Verschlusskopf 126 in den Transferkanal 1161, nicht aber in den Verschlusskanal 162 eintreten oder daraus austreten kann. Der Verschlusskopf 126 kann daher in den Transferkanal 1161 eintreten und von diesem in den Verschlusskanal 162 verschoben werden und wird darin gehalten.

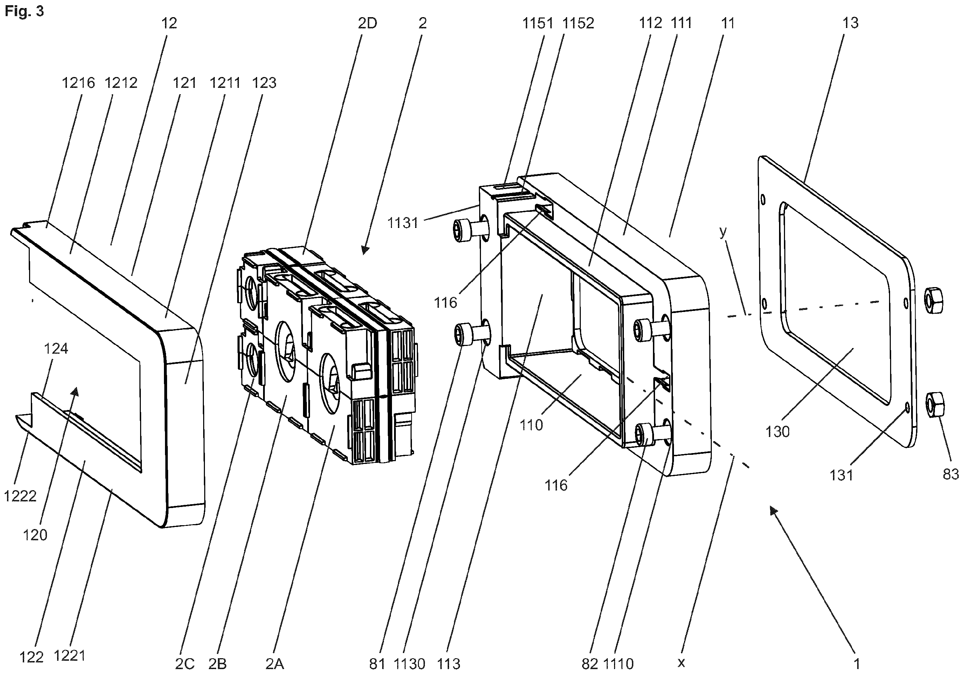

Fig. 3 zeigt die soweit bereits beschriebene Kabeldurchführungsvorrichtung 1 von Fig. 1 in Explosionsdarstellung. Die Durchführungsanordnung 2 umfasst die Durchführungsmodule 2A, 2B, 2C, 2D, die in Kombination einen Quader bilden. Zusätzlich gezeigt ist eine Dichtungsrahmen 13, dessen Form an die Form des Montagerahmens 111 angepasst ist und der eine Rahmenöffnung 130 und Schraubenöffnungen 131 aufweist, durch die hindurch die Gewindestangen der Montageschrauben 81, 82 hindurchführbar und in Schraubenmuttern 83 eindrehbar sind. Der Dichtungsrahmen 130, der vorzugsweise aus elastischem Kunststoff oder Gummi gefertigt ist, erlaubt es, den Montagerahmen 111 dicht abschliessend mit der Trennwand 9 zu verbinden.

Fig. 4a zeigt den Durchführungsrahmen 11 und die Rahmenabdeckung 12 von Fig. 1 in Schnittdarstellung mit dem Verriegelungshebel 1216, der den Verschlusskörper 113 nach aussen überragt, und der Rastnase 1215, die in der Rastsenke 1151 des Durchführungsrahmens 11 verankert ist. Der Verschlusskopf 126 wurde beim Montagevorgang der Rahmenabdeckung 12 in den Transferkanal 1161 der Verschlussöffnung 116 eingeführt und anschliessend in Verschlussrichtung in den Verschlusskanal 1162 verschoben, bis die Rastnase 1215 in die Rastsenke 1151 eingetreten ist. Der Verschlusskörper 126 ist somit im Verschlusskanal 1162 fest verankert und kann erst wieder aus der Verschlussöffnung 116 gelöst werden, wenn er zurück zur Transferöffnung 1161 verschoben wird. Dazu muss der Entriegelungshebel 1216 angehoben und die Rastnase 1215 aus der Rastsenke 1151 angehoben werden.

Wird der Entriegelungshebel 1216 angehoben und die Rahmenabdeckung 12 entgegen der Verschlussrichtung verschoben, so rastet die Rastnase 1215, wie in Fig. 4b gezeigt, in die Montagenut 1152 ein und verhindert eine weitere Verschiebung der Rahmenabdeckung 12 entgegen der Verschlussrichtung. Bei dieser Verschiebung wurde der Verschlusskopf 126 aus dem Verschlusskanal 1162 zurück in den Transferkanal 1161 verschoben und kann nun durch eine Verschiebung parallel zur Durchführungsachse y wieder aus der Verschlussöffnung 116 gelöst werden. Zu diesem Zweck verläuft die Montagenut 1152 parallel zur Durchführungsachse y bis zum Rand des Verschlusskörpers 113, weshalb die Rahmenabdeckung 12 vom Durchführungsrahmen 11 gelöst werden kann, während die Rastnase 1215 entlang der Montagenut 1152 geführt wird.

Die Montagenut 1152, die parallel zur Durchführungsachse y verläuft, ist derart positioniert, dass bei einem Eingriff der Rastnase in die Montagenut 1152, die Verriegelungsköpfe 126 der auf den Montagerahmen 11 aufgesetzten Rahmenabdeckung 12 koaxial zu den Transferkanälen 1161 der Verschlussöffnungen 116 ausgerichtet sind. Die Ankopplung der Rahmenabdeckung 12 an den Durchführungsrahmen 11 und die Entkopplung der Rahmenabdeckung 12 vom Durchführungsrahmen 11 können daher stets bequem vollzogen werden, indem die Rastnase 1215 beim Vorgang der Kopplung und beim Vorgang der Entkopplung in Eingriff mit der Montagenut 1152 gebracht wird. In der Folge kann die Rahmenabdeckung 12, wie beschrieben, entweder in die Verschlussstellung verschoben oder vom Montagerahmen 11 gelöst werden.

Die Rastnase 1215 ist hakenförmig oder sägezahnförmig ausgebildet und weist frontseitig eine geneigte Flanke auf, sodass die Rahmenabdeckung 12, wenn die Rastnase 1215 in Eingriff mit der Rastsenke 1151 (siehe Fig. 4a) oder in Eingriff mit der Montagenut 1152 (siehe Fig. 4b) steht, in eine Richtung entgegengesetzt zur Verschlussrichtung unverschiebbar gehalten ist und wenn die Rastnase 1215 in Eingriff mit der Montagenut 1152 steht (siehe Fig. 4b), von der Montagenut 1152 lösbar und in Verschlussrichtung hin zur Rastsenke 1151 verschiebbar ist.

Fig. 5 zeigt den Durchführungsrahmen 11 während des Einsetzens der Durchführungsmodule 2A, 2b, 2C, 2D der Durchführungsanordnung 2 in die Aufnahmekammer 110 des Durchführungsrahmens 11.

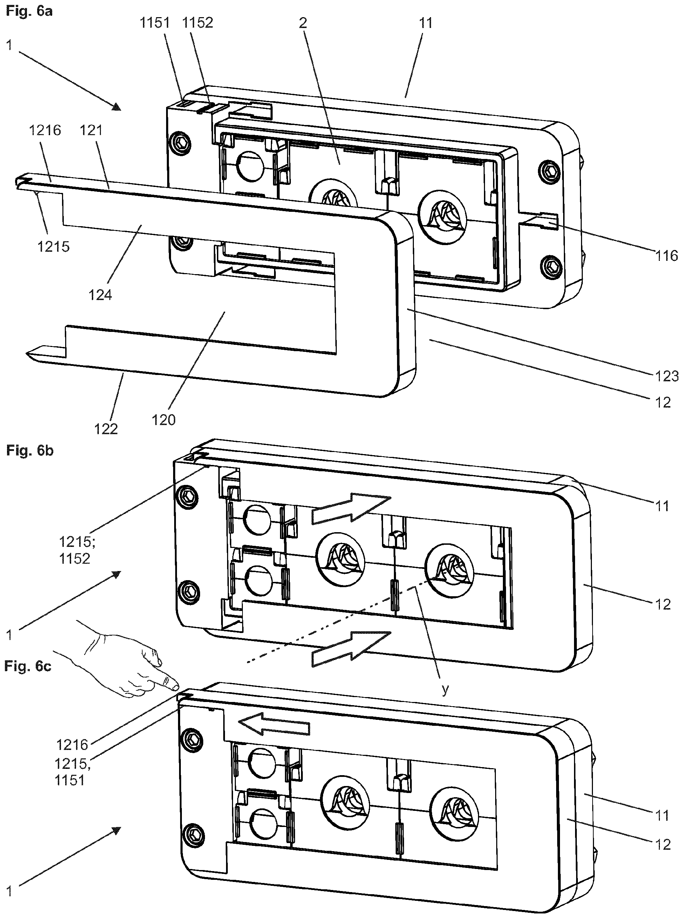

Fig. 6a zeigt die Durchführungsvorrichtung 1 von Fig. 1 mit der vom Durchführungsrahmen 11 gelösten Rahmenabdeckung 12.

Fig. 6b zeigt die Durchführungsvorrichtung 1 von Fig. 6a bei der Montage der Rahmenabdeckung 12, bei der die Rastnase 1215 der Rahmenabdeckung 12 mit der Montagenut 1152 am Verschlusskörper 113 gekoppelt wird. Nach diesem Vorgang befindet sich die Rahmenabdeckung 12 in der Montageposition. Bei der Verschiebung der Rahmenabdeckung 12 parallel zur Durchführungsachse y wird vorzugsweise ein Anpressdruck auf die Durchführungsanordnung 2 ausgeübt, sodass diese deformiert und gegen die Wände der Aufnahmekammer 110 gedrückt wird.

Fig. 6c zeigt die Durchführungsvorrichtung 1 von Fig. 6b nach der Verriegelung der Rahmenabdeckung 12 mit Verrastung der Rastnase 1215 in der Rastsenke 1151 des Verschlusskörpers 113. Die Rahmenabdeckung 12 befindet sich somit in der Verriegelungsposition und kann nur durch Betätigung des Entriegelungshebels 1216 wieder gelöst werden.

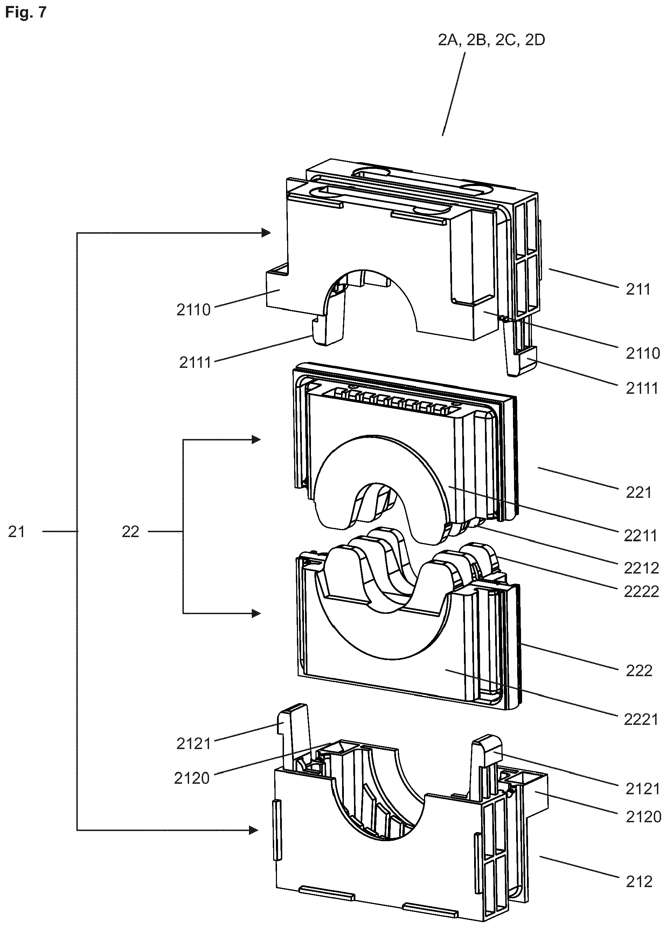

Fig. 7 zeigt eines der Durchführungsmodule 2A, 2b, 2C, 2D mit einem Halteelement 21 und einem Dichtungselement 22 in Explosionsdarstellung. Jedes Halteelement 21 zwei vorzugsweise identisch ausgebildeten Halteteile 211, 212 auf. Die Halteteile 211, 212 sind ineinander einrastbar und dazu mit Rastschlaufen 2120 und dazu korrespondierenden Raststäben 2121 versehen, die ein Rastelement aufweisen. Jedes Dichtungselement 22 weist zwei vorzugsweise identisch ausgebildete elastische Dichtungsteile 221, 222 auf, die ineinander verschiebbar und innerhalb des Halteelements 21 unter Druck gehalten sind. In dieser vorzugsweisen Ausgestaltung sind die Dichtungsteile 221, 222 mit zueinander korrespondierenden Dichtungslamellen 2212, 2222 versehen, die ineinander eingreifen und sich leicht deformieren können, um ein Kabel 7, das in den Durchführungskanal 20 eingelegt wurde, dicht abschliessend zu umschliessen.

### Bezugszeichenliste

- 1: Kabeldurchführungsvorrichtung
- 11: Durchführungsrahmen
- 110: Aufnahmekammer
- 111: Montagerahmen
- 1110: Schraubenkanäle im Montagerahmen 111
- 1111: Schraubenkanäle im Rahmenkörper 111
- 112: Lagerrahmen
- 113: Verschlusskörper
- 1130: Schraubenkanäle im Verschlusskörper 113
- 1131: Endstück des Verschlusskörpers 113 mit Rastsenke 1151
- 114: Halteleiste
- 1151: Rastsenke
- 1152: Montagenut
- 116: Verschlussöffnungen
- 1161: Transferkanal
- 1162: Verschlusskanal
- 12: Rahmenabdeckung
- 120: Abdeckungsöffnung
- 121: erster Schenkel der Rahmenabdeckung 12
- 1211: erstes Endstück des ersten Schenkels 121
- 1212: zweites Endstück des ersten Schenkels 121
- 1215: Rastnase
- 1216: Entriegelungshebel
- 122: zweiter Schenkel der Rahmenabdeckung 12
- 1221: erstes Endstück des zweiten Schenkels 122
- 1222: zweites Endstück des zweiten Schenkels 122
- 123: Verbindungkörper
- 124: Abdeckleiste
- 126: Verschlussköpfe
- 13: Dichtungsrahmen
- 130: Dichtungsöffnung
- 131: Schraubenöffnung der Dichtungsplatte
- 2: Durchführungsanordnung
- 20: Durchführungskanal
- 2A, 2B: grosse Durchführungsmodule
- 2C, 2D: kleine Durchführungsmodule
- 21: Halteelement
- 211: erstes Halteteil
- 2110: Rastschlaufen am ersten Halteteil 211
- 2111: Raststäbe am ersten Halteteil 211
- 212: zweites Halteteil
- 2120: Rastschlaufen am zweiten Halteteil 212
- 2121: Raststäbe am zweiten Halteteil 212
- 22: Dichtungselement
- 221: erstes Dichtungsteil
- 2211: Dichtungskörper am ersten Dichtungsteil 221
- 2212: Dichtungslamellen am ersten Dichtungsteil 221
- 222: zweites Dichtungsteil
- 2221: Dichtungskörper am zweiten Dichtungsteil 222
- 2222: Dichtungslamellen am ersten Dichtungsteil 222
- 7: Kabel
- 81: erste Montageschrauben
- 82: zweite Montageschrauben
- 83: Schraubenmuttern
- 9: Trennwand

## Patentansprüche

1. Kabeldurchführungsvorrichtung (1) zur abgedichteten Durchführung wenigstens eines Kabels (7) durch eine Trennwand (9) mit einem Durchführungsrahmen (11), der mit einer Rückseite mit der Trennwand (9) verbindbar ist und der eine Aufnahmekammer (110) aufweist, in der eine Durchführungsanordnung (2), die mindestens einen parallel zu einer Durchführungsachse (y) verlaufenden Durchführungskanal (20) aufweist, an einer an der Rückseite des Durchführungsrahmens (11) vorgesehenen Halteleiste (114) anliegt, und mit einer Rahmenabdeckung (12), die mit der Frontseite des Durchführungsrahmens (11) verbindbar ist und die eine durch eine Abdeckleiste (124) begrenzte Abdeckungsöffnung (120) aufweist, **dadurch gekennzeichnet, dass** der Durchführungsrahmen (11) einen Verschlusskörper (113) mit einer Rastsenke (1151) sowie mehrere Verschlussöffnungen (116) umfasst, die je einen parallel zur Durchführungsachse (y) verlaufenden Transferkanal (1161) und einen daran anschliessenden und senkrecht zur Durchführungsachse (y) verlaufenden Verschlusskanal (1162) aufweisen, und dass die Rahmenabdeckung (12) einen ersten Schenkel (121) und einen zweiten Schenkel (122) umfasst, an die die Abdeckleiste (124) anschliesst und die an ersten Endstücken (1121, 1221) durch einen Verbindungskörper (123) miteinander verbunden und die mit zweiten Endstücken (1212, 1222), zwischen denen die Abdeckungsöffnung (120) nicht abgeschlossen ist, dem Verschlusskörper (113) zugewandt sind, und dass die Rahmenabdeckung (12) den Verschlussöffnungen (116) zugewandte Verschlussköpfe (126) aufweist, die je parallel zur Durchführungsachse (y) durch einen zugeordneten Transferkanal (1161) in eine Verschlussöffnung (116) einschiebbar und senkrecht zur Durchführungsachse (y), vorzugsweise parallel zu einer Längsachse des Durchführungsrahmens (111), innerhalb des zugehörigen Verschlusskanals (1162) in Verschlussrichtung gegen den Verschlusskörper (113) verschiebbar sind, bis eine an einem zweiten Endstück (1212) des ersten Schenkels (121) vorgesehene Rastnase (1215) in einer Verschlussstellung der Rahmenabdeckung (12) in die Rastsenke (1151) am Verschlusskörper (113) einrastet.

2. Kabeldurchführungsvorrichtung (1) nach Anspruch 1, **dadurch gekennzeichnet, dass** der mit dem Durchführungsrahmen (11) verbundene Verschlusskörper (113) ein erstes und ein zweites Endstück (1131, 1132) aufweist,
wobei das erste Endstück (1131) des Verschlusskörpers (113), an dessen Oberseite die Rastsenke (1151) vorgesehen ist, vom zweiten Endstück (1212) des ersten Schenkels (121), an dessen Unterseite die Rastnase (1215) vorgesehen ist, in der Verschlussstellung der Rahmenabdeckung (12) ganz oder teilweise überlappt ist, und
wobei das zweite Endstück (1132) des Verschlusskörpers (113) in der Verschlussstellung der Rahmenabdeckung (12) vom zweiten Endstück (1222) des zweiten Schenkels (122) ganz oder teilweise überlappt ist.

3. Kabeldurchführungsvorrichtung (1) nach Anspruch 1 oder 2, **dadurch gekennzeichnet, dass** die Abdeckleiste (124) in der Verschlussstellung der Rahmenabdeckung (12) an den Verschlusskörper (113) anschliesst und mit dem Verschlusskörper (113), der die Abdeckungsöffnung (120) abschliesst, vorzugsweise eine ebene Frontfläche an der Frontseite der Kabeldurchführungsvorrichtung (1) bildet.

4. Kabeldurchführungsvorrichtung (1) nach Anspruch 3, **dadurch gekennzeichnet, dass** der Durchführungsrahmen (11) einen Montagerahmen (111) und einen demgegenüber verkleinerten Lagerrahmen (112) aufweist, die in Richtung der Durchführungsachse (y) gegeneinander versetzt sind und die an einer Seite an den Verschlusskörper (113) anschliessen, der zusammen mit dem Montagerahmen (111) und dem Lagerrahmen (112) die Aufnahmekammer (110) umschliesst, wobei die Rahmenabdeckung (12) vorzugsweise zumindest annähernd parallel zur Durchführungsachse (y) auf den Lagerrahmen (112) aufsetzbar und nach dem Eingriff der Verschlussköpfe (126) in den Transferkanal (1161) parallel zur Längsachse (x) des Durchführungsrahmens (11) in die Verschlussstellung verschiebbar ist.

5. Kabeldurchführungsvorrichtung (1) nach einem der Ansprüche 1-4, **dadurch gekennzeichnet, dass** die Rahmenabdeckung (12) in der Verschlussstellung den Lagerrahmen (112) vorzugsweise bis zum Verschlusskörper (113) umschliesst und stirnseitig am Montagerahmen (111) anliegt und dass die Rahmenabdeckung (12) und das von den zweiten Endstücken (1212, 1222) der Schenkel (121, 122) überlappte Teil des Verschlusskörpers (113) denselben Querschnitt aufweisen wie der Montagerahmen (111) und bündig daran anschliessen, sodass der Durchführungsrahmen (11) und die Rahmenabdeckung (12) einen praktisch einheitlichen Körper bilden.

6. Kabeldurchführungsvorrichtung (1) nach einem der Ansprüche 1-5, **dadurch gekennzeichnet, dass** das zweite Endstück (1212) des ersten Schenkels (121) einen Entriegelungshebel (1216) aufweist, welcher in der Verschlussstellung der Rahmenabdeckung (12) über den Verschlusskörper (113) hinausragt und bei dessen Betätigung die Rastnase (1215) aus der Rastsenke (1151) lösbar ist.

7. Kabeldurchführungsvorrichtung (1) nach einem der Ansprüche 1-6, **dadurch gekennzeichnet, dass** der Verschlusskörper (113) beabstandet von der Rastsenke (1151) eine Montagenut (1152) aufweist, die parallel zur Durchführungsachse (y) verläuft und die derart positioniert ist, dass bei einem Eingriff der Rastnase (1215) in die Montagenut (1152), die Verschlussköpfe (126) der auf den Montagerahmen (11) aufgesetzten Rahmenabdeckung (12) koaxial zu den Verschlussöffnungen (116) ausgerichtet sind.

8. Kabeldurchführungsvorrichtung (1) nach Anspruch 7, **dadurch gekennzeichnet, dass** die Montagenut (1152) nach aussen gegen den Rand des Verschlusskörpers (113) geöffnet ist und die Rastnase (1215) von der Frontseite her koaxial in die Montagenut (1152) einführbar und darin verschiebbar ist.

9. Kabeldurchführungsvorrichtung (1) nach einem der Ansprüche 1-8, **dadurch gekennzeichnet, dass** die Rastnase (1215) hakenförmig oder sägezahnförmig ausgebildet ist und frontseitig eine geneigte Flanke aufweist, sodass die Rahmenabdeckung (12), wenn die Rastnase (1215) in Eingriff mit der Rastsenke (1151) oder in Eingriff mit der Montagenut (1152) steht in eine Richtung entgegengesetzt zur Verschlussrichtung unverschiebbar gehalten ist und wenn die Rastnase (1215) in Eingriff mit der Montagenut (1152) steht, bei einer Verschiebung der Rahmenabdeckung (12) in Verschlussrichtung selbsttätig aus der Montagenut (1152) lösbar und zur Rastsenke (1151) verschiebbar ist.

10. Kabeldurchführungsvorrichtung (1) nach Anspruch 7, 8 oder 9, **dadurch gekennzeichnet, dass** bei einer Verschiebung der Rahmenabdeckung (12) in Verschlussrichtung, bei der die Rastnase von der Montagenut (1152) zur Rastsenke (1151) gelangt, jeder der Verschlussköpfe (126) in den zugehörigen Verschlusskanal (1162) der Verschlussöffnungen (116) gefahren werden.

11. Kabeldurchführungsvorrichtung (1) nach einem der Ansprüche 1-10, **dadurch gekennzeichnet, dass** vorzugsweise jeder der Verschlussköpfe (126) schwalbenschwanzförmig ausgebildet ist und eine Frontseite mit einem Querschnitt aufweist, die etwa dem Querschnitt des Transferkanals (1161) entspricht und dass der anschliessende Verschlusskanal (1162) zur Aufnahme des Verschlusskopfs (126) geeignet ist und diesen teilweise umschliesst, sodass nur ein verjüngtes Teil des Verschlusskopfs (126) aus dem Verschlusskanal (1162) heraustreten kann und der Verschlusskopf (126) innerhalb des Verschlusskanals (1162) nur parallel zur Verschlussrichtung der Rahmenabdeckung (12) verschiebbar ist.

12. Kabeldurchführungsvorrichtung (1) nach einem der Ansprüche 1-11, **dadurch gekennzeichnet, dass** die Durchführungsanordnung (2) zumindest teilweise elastisch ausgebildet und etwas grösser als die Aufnahmekammer (110) dimensioniert ist, sodass sie beim Einfügen in die Aufnahmekammer (110) und/oder beim Aufsetzen der Rahmenabdeckung (12) komprimiert und dicht abschliessend an die Wände der Aufnahmekammer (110) gepresst wird.

13. Kabeldurchführungsvorrichtung (1) nach einem der Ansprüche 1-12, **dadurch gekennzeichnet, dass** die Durchführungsanordnung (2) mehrere Durchführungsmodule (2A, 2B, 2C, 2D) umfasst, die je einen Durchführungskanal (20) aufweisen.

14. Kabeldurchführungsvorrichtung (1) nach Anspruch 13, **dadurch gekennzeichnet, dass** jedes der Durchführungsmodule (2A, 2B, 2C, 2D) ein Halteelement (21) mit zwei vorzugsweise identisch ausgebildeten Halteteilen (211, 212), die ineinander einrastbar sind, und ein Dichtungselement (22) mit zwei vorzugsweise identisch ausgebildeten elastischen Dichtungsteilen (221, 222), die ineinander verschiebbar und innerhalb des Halteelements (21) unter Druck gehalten sind, umfasst.

15. Kabeldurchführungsvorrichtung (1) nach Anspruch 14, **dadurch gekennzeichnet, dass** die Halteteile (211, 212) zueinander korrespondierende Rastelemente (2110, 2111) und die Dichtungsteile (221, 222) zueinander korrespondierende Dichtungslamellen (2212, 2222) aufweisen.
